# EUROPEAN PATENT APPLICATION

(11) **EP 3 298 905 A1**
(43) Date of publication of application: **28.03.2018**
(21) Application number: 16796574.8
(22) Date of filing: 19.05.2016
(51) Int. Cl.: A23G 1/00, A23G 1/30

(54) **CHOCOLATE SLICE**

(30) Priority: 19.05.2015 JP 2015102212
(71) Applicant: Bourbon Corporation, Kashiwazaki-shi, Niigata 945-8611 (JP)
(72) Inventor: SASAKI Shigekazu, Kashiwazaki-shi Niigata 945-8611 (JP); NAKAMURA Mutsumi, Kashiwazaki-shi Niigata 945-8611 (JP); KATSUMATA Kuniaki, Kashiwazaki-shi Niigata 945-8611 (JP)
(74) Representative: Gillard, Richard Edward
(86) International application number: PCT/JP2016/064938
(87) International publication number: WO 2016/186181

(57) **Abstract**

The present invention relates to a sliced chocolate that has high film releasability and favorable breakage resistance, and still maintains original tastes of nama-chocolate, and to a method for manufacturing the same. More specifically, the sliced chocolate of the invention includes gelatin, in which the sliced chocolate has a gelatin content of from 0.8 to 9% by mass with respect to the sliced chocolate, and is an oil-in-water type emulsion.

## Description

### CROSS-REFERENCE TO RELATED APPLICATIONS

This application is based upon and claims the benefit of priority from Japanese Patent Application No. 2015-102212, filed on May 19, 2015; the entire contents of which are incorporated herein by reference.

### BACKGROUND OF THE INVENTION

### Field of the Invention

The present invention relates to a sliced chocolate, a method for manufacturing the same, a method for improving wrapping film releasability of a sliced chocolate, and a method for improving breakage resistance of a sliced chocolate.

### Background Art

Water-containing chocolates manufactured by adding aqueous ingredients into chocolate are widely used for uses, such as Western confectionary and dessert. Among them, nama-chocolate typified by ganache produced by mixing cream and liqueur or water, and the like as aqueous ingredients into molten chocolate (base chocolate) is a product popular among consumers due to its smooth meltability in the mouth and thick flavor (rich flavor). Most nama-chocolates are in solid form. To enjoy nama-chocolate together with other food such as bread, spread chocolate-flavored with cocoa powder, essence, and/or the like is used to add chocolate flavor to other food. Since it is spread, it needs to be coated and spread by using a knife or the like.

On the other hand, due to the recent trend of eating more bread, sliced cheeses have been manufactured as cheese suitable to eat with bread. Sliced cheese is thin in thickness, and after releasing from a wrapping film, it can be directly spread on a bread surface. Thus, use of a knife, melting of cheese, and the like are unnecessary, enabling easy eating. Additionally, from its sliced form and properties (such as breakage resistance), sliced cheese is used in various cuisines, such as rolling up other food therewith.

There is a high demand for food in the form like sliced cheese, and Japanese Unexamined Patent Application Publication No. 07-236422 (Patent Literature 1) discloses a sliced chocolate including from 25 to 40% by weight of disaturated monolinoleate and from 5 to 20% by weight of non-tempering type hard butter. However, disaturated monolinoleate needs to be transesterified by using a special fatty acid as raw material, and, if needed, fractionated. It is not an easily available material. In addition, due to the high percentages of desaturated monolinoleate and non-tempering type hard butter, the sliced chocolate had no smooth meltability in the mouth (melt-in-the-mouth feeling) and rich flavor (richness) unique to nama-chocolate.

Thus, to the knowledge of the inventor, no sliced chocolates have been reported at all that have sliced cheese-like form and properties and can be manufactured from easily available raw materials, while maintaining original tastes (smooth meltability in the mouth and rich flavor) of nama-chocolate.

### Citation List

### [Patent Literature]

Patent Literature 1: Japanese Unexamined Patent Application Publication No. 07-236422

### SUMMARY OF THE INVENTION

The present inventors recently have found that a sliced chocolate obtained by adding a specific amount of gelatin content, mixing and emulsifying into an oil-in-water type emulsion, and molding into slices has sliced cheese-like properties, i.e., releasability from a wrapping film and favorable breakage resistance at cold temperature and room temperature, while maintaining original tastes (smooth meltability in the mouth and rich flavor) of nama-chocolate. The present invention is based on the findings as above.

Accordingly, it is an object of the present invention to provide a sliced chocolate that has high film releasability and favorable breakage resistance, and still maintains original tastes of nama-chocolate, and a method for manufacturing the sliced chocolate.

According to the present invention, the following invention is provided:
(1) A sliced chocolate comprising gelatin, the sliced chocolate having a gelatin content of from 0.8 to 9% by mass with respect to the sliced chocolate and being an oil-in-water type emulsion.
(2) The sliced chocolate according to (1), in which the gelatin content is from 0.8 to 2.8% by mass with respect to the sliced chocolate.
(3) The sliced chocolate according to (1) or (2), closely wrapped by a wrapping film.
(4) The sliced chocolate according to (3), in which the wrapping film is a wrapping film for sliced cheese, and the sliced chocolate is individually wrapped by the film.
(5) The sliced chocolate according to (4), in which a form of individual wrapping of the sliced chocolate has a size of from 40 to 100 mm × from 40 to 100 mm × from 0.5 to 3 mm in thickness.
(6) The sliced chocolate according to any of (1) to (5), substantially not comprising glycerin.
(7) The sliced chocolate according to any of (1) to (6), in which the sliced chocolate has a water content of from 11 to 30% by mass.
(8) The sliced chocolate according to (7), in which the water content of the sliced chocolate is from 13 to 30% by mass.
(9) The sliced chocolate according to any of (1) to (8), in which the gelatin content is from 1.0 to 2.5% by mass with respect to the sliced chocolate.
(10) The sliced chocolate according to (9), in which the gelatin content is from 1.1 to 1.6% by mass with respect to the sliced chocolate.
(11) The sliced chocolate according to any of (1) to (10), in which the chocolate has an oil content of from 24 to 40% by mass.
(12) The sliced chocolate according to (11), in which the oil content of the chocolate is from 26 to 40% by mass.
(13) A method for manufacturing the sliced chocolate according to any of (1) to (12), comprising steps of pushing apart a molten base of a chocolate including gelatin into slices in a wrapping film, and cooing and solidifying the slices.
(14) The manufacturing method according to (13), comprising a step of individually wrapping by the wrapping film, the wrapping film being a wrapping film for sliced cheese.
(15) The manufacturing method according to (13) or (14), in which the molten base of the chocolate has a viscosity of 100 poise or more.
(16) The manufacturing method according to (15), in which the molten base of the chocolate has a viscosity of 200 poise or more.
(17) The manufacturing method according to (15) or (16), in which the molten base of the chocolate has a product temperature of from 33 to 50°C.
(18) The manufacturing method according to (17), in which the molten base of the chocolate has a product temperature of from 35 to 44°C.
(19) A method for improving wrapping film releasability of a sliced chocolate, comprising adding gelatin in an amount of from 0.8 to 9% by mass with respect to the sliced chocolate.
(20) The method according to (19), comprising adding the gelatin in an amount of from 0.8 to 2.8% by mass with respect to the sliced chocolate.
(21) A method for improving breakage resistance of a sliced chocolate, comprising adding gelatin in an amount of from 0.8 to 9% by mass with respect to the sliced chocolate, and mixing and emulsifying into an oil-in-water type emulsion..
(22) The method according to (21), comprising adding the gelatin in an amount of from 0.8 to 2.8% by mass with respect to the sliced chocolate, and mixing and emulsifying into an oil-in-water type emulsion.

According to the present invention, there can be provided a sliced chocolate that has high film releasability and favorable breakage resistance, and still maintains original tastes of nama-chocolate, and a method for manufacturing the same. Additionally, the sliced chocolate of the invention can be manufactured by using raw materials that are easily available and widely distributed as food stuffs, thus enabling safe eating.

### BRIEF DESCRIPTION OF THE DRAWINGS

FIGS. 1 are photographs depicting one example of determination criteria for breakage resistance, in which FIG. 1(a) depicts that breakage resistance is extremely high and there is plasticity, and FIG. 1(b) depicts that breakage resistance is low and there is no plasticity.
FIG. 2 is a photograph of a sliced chocolate released from a wrapping film at a product temperature of 20°C in Test Example 19 of Example 4 of Examples that will be described later.
FIG. 3 is a photograph of a sliced chocolate released from a wrapping film at a product temperature of 20°C in Test Example 20 of Example 4 of Examples that will be described later.

### DETAILED DESCRIPTION OF THE INVENTION

### Sliced Chocolate

A sliced chocolate according to the present invention comprises gelatin, in which the sliced chocolate has a gelatin content of from 0.8 to 9% by mass with respect to the sliced chocolate and is an oil-in-water type emulsion.

The term "chocolate" is not limited to components defined by the code "Fair Competition Codes Concerning Labeling on Chocolate and/or Chocolate-like Food" and the like, and encompasses chocolates using a so-called cacao butter substitute and oil-and-fat processed foods. In a preferable embodiment of the present invention, the chocolate of the invention is nama-chocolate. Nama-chocolate means chocolate including a chocolate base in an amount of 60% or more of a total weight, cream in an amount of 10% or more of the total weight, and a water content (including a water content contained in the cream) in an amount of 10% or more of the total weight and processed products of chocolate using the above chocolate in an amount of 60% or more of the total weight and including a chocolate base in an amount of 60% or more of the total weight.

As for the gelatin, the origin of raw material thereof, a manufacturing method therefor, and the like are not particularly limited. For example, there may be mentioned pig skin gelatin, pig bone gelatin, cowhide gelatin, cow bone gelatin, and fish gelatin. Before heat treatment, another treatment, such as alkali treatment or acid treatment, may be applied to the gelatin. The gelatin is preferably a pig-derived gelatin, and more preferably a pig skin gelatin. The above gelatins may be used singly or in combination of two or more thereof. The sliced chocolate including gelatin is more advantageous in that it has higher film releasability as compared to sliced chocolates including an other gelling agent, such as agar, Arabian gum, or HM pectin, is less sticky (less adhesive) when holding the sliced chocolate released from a wrapping film in hand, and has favorable texture,.

A gelatin content in the sliced chocolate of the present invention is, in terms of favorable moldability, desirably from 0.8 to 9% by mass, preferably from 0.8 to 7% by mass, more preferably from 0.8 to 5% by mass, still more preferably from 0.8 to 3% by mass, and still further more preferably from 0.8 to 2.8% by mass, furthermore, in terms of favorable film releasability, preferably from 1.0 to 2.5% by mass, and more preferably from 1.1 to 2.3% by mass, furthermore, in terms of favorable elasticity, preferably from 1.1 to 2.0% by mass, more preferably from 1.1 to 1.6% by mass, and still more preferably from 1.1 to 1.5% by mass, and furthermore, in terms of favorable original tastes of nama-chocolate, preferably from 1.1 to 1.4% by mass, and more preferably from 1.1 to 1.3% by mass. Herein, the term "elasticity" means a resilient tactile sensation of food in sliced form, like sliced cheese.

The term "oil-in-water type emulsion" is also referred to as O/W type (system) emulsified product or O/W type (system) emulsion, and means an emulsion in which an oil phase is dispersed in a water phase as a continuous phase. Determination on an emulsified system of chocolate can be made, for example, by the presence or absence of electrical energization according to a method described in Example 1 of Examples that will be described later. For example, using a pocket type multitester (manufactured by Mother Tool Co., Ltd.), each electrode is contacted with a surface of a base of a chocolate product cooled and solidified to check the presence or absence of electrical energization, whereby the emulsion system of the chocolate can be determined. In this case, when the emulsion system is an O/W type (system), electrical current flows inside the chocolate, so that the tester responds and the needle swings (electrically energized). When it is a W/O type (system), current does not flow inside the chocolate, so that the tester does not respond and the needle does not swing (not electrically energized).

The sliced chocolate of the present invention may include an emulsifier. Examples of the emulsifier include monoglyceride, organic acid monoglyceride, polyglycerol fatty acid ester, polyricinoleate, sucrose fatty acid ester, propylene glycol fatty acid ester, sorbitan fatty acid ester, and lecithin. These may be used singly or in combination of two or more thereof. An emulsifier content in the sliced chocolate of the invention is preferably below 1.0% by mass, more preferably below 0.5% by mass, and still more preferably 0.1% or less by mass, in that the taste of the emulsifier is not emphasized and there is no acridity.

According to a preferable embodiment of the present invention, the sliced chocolate of the invention substantially does not include glycerin as a softener. Herein, the expression "substantially does not include glycerin" means that the chocolate of the invention does not include an amount of glycerin that is effective to reduce the viscosity of a mixture solution during a manufacturing process. It means that a glycerin content in the sliced chocolate of the invention is preferably below 0.5% by mass, more preferably below 0.3% by mass, and still more preferably below 0.1% by mass.

The sliced chocolate of the present invention may include optional ingredients other than gelatin, an emulsifier, and glycerin in a range not deteriorating smooth meltability in the mouth and flavor release unique to chocolate, moldability, film releasability, and breakage resistance. Examples of the optional ingredients include syrup, high-fructose corn syrup, sugar alcohol, fondant, dietary fibers, milk protein, soy protein, wheat protein, fruit juice, fruit juice powder, green tea powder, sweeteners, acidulants, essences, colorants, starch, amino acids, thickening polysaccharides, and edible oils and fats. These may be used singly or in combination of two or more thereof.

A water content in the sliced chocolate of the present invention can be appropriately set as long as the sliced chocolate of the invention can be obtained. According to a preferable embodiment of the invention, in the sliced chocolate of the invention, the water content of the sliced chocolate is desirably from 11 to 30% by mass in terms of emulsification, film releasability, breakage resistance, and moldability, preferably from 13 to 30% by mass, and more preferably from 15 to 30% by mass. According to a more preferable embodiment of the invention, in the sliced chocolate of the invention, the water content of the sliced chocolate is from 15 to 25% by mass, more preferably from 16 to 25% by mass, still more preferably from 16 to 20% by mass, and still further more preferably from 17 to 19% by mass. Herein, the water content of the sliced chocolate is at the same level as the water content of a molten base before being cooled and solidified into sliced chocolate. The sliced chocolate of the invention has much water content, so that it can be enjoyed while feeling smooth in the throat, even when the sliced chocolate of the invention is heated by toasting or the like.

According to a preferable embodiment of the present invention, in the sliced chocolate of the invention, the water content of the sliced chocolate is from 11 to 30% by mass, and the gelatin content of the sliced chocolate is from 0.8 to 9% by mass. More preferably, the water content of the sliced chocolate is from 15 to 25% by mass, and the gelatin content of the sliced chocolate is from 0.8 to 2.8% by mass. Still more preferably, the water content of the sliced chocolate is from 15 to 20% by mass, and the gelatin content of the sliced chocolate is from 1.0 to 2.5% by mass. Still further more preferably, the water content of the sliced chocolate is from 17 to 19% by mass, and the gelatin content of the sliced chocolate is from 1.1 to 2.0% by mass.

In the sliced chocolate of the present invention, an oil content of the sliced chocolate is desirably from 24 to 40% by mass. Herein, the term "oil content" means a total oil content contained in the sliced chocolate. The oil content of the sliced chocolate of the invention is preferably from 26 to 40% by mass, more preferably from 26 to 39% by mass, still more preferably from 26 to 35% by mass, and still further more preferably from 27 to 34% by mass. Herein, the oil content of the sliced chocolate is at the same level as an oil content of the molten base before being cooled and solidified into sliced chocolate.

Alternatively, in the sliced chocolate of the present invention, the total oil content of a base chocolate for manufacturing the sliced chocolate is desirably from 26 to 45% by mass. When the total oil content of the base chocolate for manufacturing the sliced chocolate is equal to or less than 45% by mass, it is advantageous in that possibility of separation is reduced in manufacturing the chocolate. The total oil content of the base chocolate for manufacturing the sliced chocolate of the invention is preferably from 26 to 40% by mass, more preferably from 28 to 40% by mass, and still more preferably from 29 to 38% by mass.

According to a preferable embodiment of the present invention, in the sliced chocolate of the invention, the total oil content of the base chocolate for manufacturing the sliced chocolate is from 26 to 45% by mass, the water content of the sliced chocolate is from 11 to 30% by mass, and the gelatin content of the sliced chocolate is from 0.8 to 9% by mass. More preferably, the total oil content of the base chocolate for manufacturing the sliced chocolate is from 26 to 40% by mass, the water content of the sliced chocolate is from 15 to 25% by mass, and the gelatin content of the sliced chocolate is from 0.8 to 2.8% by mass. Sill more preferably, the total oil content of the base chocolate for manufacturing the sliced chocolate is from 28 to 40% by mass, the water content of the sliced chocolate is from 15 to 20% by mass, and the gelatin content of the sliced chocolate is from 1.0 to 2.5% by mass. Still further more preferably, the total oil content of the base chocolate for manufacturing the sliced chocolate is from 29 to 38% by mass, the water content of the sliced chocolate is from 17 to 19% by mass, and the gelatin content of the sliced chocolate is from 1.1 to 2.0% by mass.

Alternatively, according to a preferable embodiment of the present invention, in the sliced chocolate of the invention, the oil content of the sliced chocolate is from 24 to 40% by mass, the water content of the sliced chocolate is from 11 to 30% by mass, and the gelatin content of the sliced chocolate is from 0.8 to 9% by mass. More preferably, the oil content of the sliced chocolate is from 26 to 40% by mass, the water content of the sliced chocolate is from 15 to 25% by mass, and the gelatin content of the sliced chocolate is from 0.8 to 2.8% by mass. Still more preferably, the oil content of the sliced chocolate is from 26 to 35% by mass, the water content of the sliced chocolate is from 15 to 20% by mass, and the gelatin content of the sliced chocolate is from 1.0 to 2.5% by mass. Still further more preferably, the oil content of the sliced chocolate is from 27 to 34% by mass, the water content of the sliced chocolate is from 17 to 19% by mass, and the gelatin content of the sliced chocolate is from 1.1 to 2.0% by mass.

The term "sliced chocolate" refers to chocolate in a form like sliced cheese. The sliced chocolate is not particularly limited as long as it is of a sheet shape having a thickness of from 0.5 to 3 mm. The sheet having such a shape may be a quadrangular (for example, square, rectangular, or trapezoidal) sheet, or may be circular and oval sheets. In the case of a quadrangular shape, the sliced chocolate is, for example, a chocolate having a sheet shape having a size of from 10 to 500 mm × from 10 to 500 mm × from 0.5 to 3 mm in thickness, and preferably from 40 to 100 mm × from 40 to 100 mm × 0.5 to 3 mm in thickness. In the present invention, in the case of a circular shape, the sliced chocolate may be, for example, of a sheet shape having a size of from 40 to 300 mm in diameter × from 0.5 to 3 mm in thickness, and in the case of an oval shape, may be, for example, of a sheet shape having a size of from 40 to 300 mm in long diameter × from 40 to 300 mm in short diameter × from 0.5 to 3 mm in thickness. According to one embodiment of the invention, the sliced chocolate of the invention may be of a sheet having perforation(s) or slit(s) formed therein.

According to a preferable embodiment of the present invention, the sliced chocolate of the invention is closely wrapped by a wrapping film. The expression "being closely wrapped" means that the film is directly attached to a surface of the sliced chocolate without contacting with air. The wrapping film is applicable to a machine for filling and wrapping sliced chocolate, and is not particularly limited as long as it can closely wrap sliced chocolate. The wrapping film is preferably a plastic film or cellophane, and more preferably a PP (polypropylene) film, a PET (polyethylene terephthalate) film, a PVDC (polyvinylidene chloride) film, or a polyvinylidene chloride coat film. The wrapping film may be a film whose both sides or one side is part-coated or over-coated. The wrapping film is preferably a release PET film. The thickness of the wrapping film is not particularly limited as long as the film is applicable to a filling and wrapping machine for sliced chocolate and can wrap the sliced chocolate in close contact therewith. The thickness of the wrapping film is, for example, from 10 to 30 µm, preferably from 12 to 25µm, and more preferably from 15 to 20 µm. Examples of the wrapping film that can be used include part coat, over coat ink/release PET films (16 µm, Howa Sangyo Co., Ltd.), an OPP film (25 µm in thickness, Futamura Chemical Co., Ltd.), PVDC coated PET films (13 µm and 17µm, Toyobo Co., Ltd.), a single sided heat seal OPP (Futamura Chemical Co., Ltd.), and double sided heat seal/single sided heat seal HSOPP films (Nihon Cellonpack Co., Ltd).

According to a preferable embodiment of the present invention, the wrapping film is a wrapping film for sliced cheese used in sliced cheese manufacturing methods, and more preferably, a film that can be used in a hot pack system wrapping in a heated molten state or a cold pack system wrapping a product cooled and solidified before being wrapped.

According to a preferable embodiment of the present invention, the sliced chocolate of the invention is a sliced chocolate individually wrapped by a wrapping film for sliced cheese.

In the sliced chocolate of the present invention, a form of individual wrapping of the sliced chocolate is desirably from 40 to 100 mm × from 40 to 100 mm × from 0.5 to 3 mm in thickness.

The thickness of the sliced chocolate of the present invention is preferably from 1 to 3 mm, more preferably from 1 to 2.5 mm, and still more preferably 2 mm. By setting the thickness in a range of from 1 to 3 mm, there can be obtained a sliced chocolate that has plasticity, high deformation flexibility, and physical properties that enable wrapping of other food materials such as fruits and vegetables and can facilitate processing by using a mold. By setting the thickness to 2 mm, there can be obtained a sliced chocolate best in film releasability, tactile sensation, and the like. It is preferable that the thickness does not exceed 3 mm, because at the beginning of chewing, the chocolate exhibits softness and provides light tactile sensation.

According to one embodiment of the present invention, the sliced chocolate of the invention may be distributed by cutting the sliced chocolate of the invention into strips, specifically, into long and narrow rectangles and bagging the rectangles of chocolate in packaging bags. For example, the sliced chocolate of the invention is obtained by cutting a sheet having a thickness of from 0.5 to 3 mm into from 1 to 40 mm-wide slices, and preferably 10 mm-wide slices, and bagging the slices of chocolate in bags. The sliced chocolate thus obtained has favorable breakage resistance even though not individually wrapped, thus enabling prevention of further breakage during distribution. In addition, due to the favorable releasability, it can be expected that adhesion to the packaging bags can be prevented. The material of the packaging bags may be the same as the material of the wrapping film. Such a strip-shaped sliced chocolate can also be referred to as shredded chocolate, and may be eaten as they are or toasted by placing on bread or the like.

### Method for Manufacturing Sliced Chocolate

The sliced chocolate of the present invention is obtained by molding a molten base of a chocolate including gelatin into slices, and preferably obtained by pushing apart the molten base of the chocolate including gelatin into slices in a wrapping film, and cooling and solidifying the slices. In other words, the method for manufacturing the sliced chocolate of the invention includes steps of pushing apart the molten base of a chocolate including gelatin into slices in a wrapping film, and cooling and solidifying the slices.

According to a preferable embodiment of the present invention, the manufacturing method of the invention includes steps of adding gelatin, pushing apart a molten chocolate base mixed and emulsified into an oil-in-water type emulsion into slices in the wrapping film, and cooling and solidifying the slices.

The term "molten chocolate base" means a mixture liquid including at least a molten chocolate (base chocolate), aqueous ingredients, and gelatin and emulsified into an oil-in-water type emulsion, before being cooling and solidified into a sliced chocolate.

The step of pushing apart into slices in the wrapping film is a step performed in a hot pack system of a so-called sliced cheese manufacturing method, and, for example, means a step of continuously injecting (filling) the molten base in the film, pushing the molten base apart by rollers, a clipping belt, and the like to divide, and molding into slices.

The cooling and solidifying step is not particularly limited as long as the molten chocolate base can be solidified, and preferred is air cooling in a cooler (refrigerator). The temperature of air cooling is desirably 10°C or less, preferably from 1 to 9°C, more preferably from 1 to 8°C, still more preferably from 1 to 6°C, and still further more preferably 5°C. Usually, the cooling step in the slice cheese manufacturing method performs cooling in water. However, in the method for manufacturing the sliced chocolate of the present invention, air cooling is desirable in terms of prevention of bacterial growth. The time of air cooling is desirably within 5 minutes, and preferably from 1 to 2 minutes.

According to a preferable embodiment of the present invention, the manufacturing method of the invention includes a step of individually wrapping by a wrapping film, in which the film is a wrapping film for sliced cheese. The individually wrapping step means a step of cutting the sliced chocolate molded into slices together with the wrapping film in such a manner as to have a desired form of individual wrapping.

In the manufacturing method of the present invention, the viscosity of the molten chocolate base is desirably 100 poise (P) or more, preferably 150 poise or more, more preferably 200 poise or more, and still more preferably 300 poise or more, in that there scarcely occur oozing and extrusion of chocolate to divided portions (in other words, squeezed portions) before cooling and solidifying after molding, thus providing favorable appearance. The viscosity of the molten chocolate base is preferably from 100 to 600 poise, more preferably from 150 to 600 poise, still more preferably from 200 to 600 poise, still further more preferably from 250 to 500 poise, yet still further more preferably from 300 to 400 poise, and even yet still further more preferably from 300 to 350 poise. Herein, the term "poise (P)" means a unit of viscosity, and 1 centipoise (cp) can also be referred to as 1 mPa.s (milli Pascal second) and 0.001 Pa.s (Pascal second). The viscosity of the molten base can be measured by using a viscometer usually used in the fields of food. For example, the viscosity can be measured by using a device described in Example 1 of Examples that will be described later. Depending on difference in viscosity, moldability (the presence or absence of oozing and extrusion due to squeezing, and the like) of the sliced chocolate changes.

In the manufacturing method of the present invention, the temperature of the molten chocolate base (product temperature) is not particularly limited as long as a desired viscosity can be maintained. The temperature thereof is desirably from 33 to 50°C, and preferably from 35 to 44°C in terms of favorable moldability in the method for manufacturing the sliced chocolate. The product temperature of the chocolate can be appropriately changed depending on the concentration and kind of gelatin.

According to a preferable embodiment of the present invention, in the manufacturing method of the invention, the viscosity of the molten chocolate base is from 100 to 600 poise and the product temperature of the chocolate is from 33 to 50°C, more preferably, from 150 to 600 poise and the product temperature is from 33 to 44°C, and still more preferably, the viscosity of the molten chocolate base is from 150 to 400 poise and the product temperature of the chocolate is from 35 to 42°C.

In the manufacturing method of the present invention, a slice cheese manufacturing machine using a hot pack system may be diverted for use, and, preferably, a slice cheese manufacturing machine using a hot pack system whose cooling method is changed from water cooling to air cooling may be diverted for use.

According to one embodiment of the present invention, there is provided a method for improving wrapping film releasability of a sliced chocolate, including adding gelatin in an amount of from 0.8 to 9% by mass with respect to the chocolate. Herein, the expression "improving wrapping film releasability" means to enhance the releasability of a sliced chocolate from a film. The film releasability can be determined based on releasability of the sliced chocolate from the wrapping film at preferably from 1 to 25°C, more preferably from 3 to 25°C, and still more preferably from 5 to 20°C, and, for example, can be determined based on determination criteria of Example 1 of Examples that will be described later.

According to another embodiment of the present invention, there is provided a method for improving breakage resistance of sliced chocolate, including adding gelatin in an amount of 0.8 to 9% by mass with respect to the chocolate, and mixing and emulsifying into an oil-in-water type emulsion. Herein, the expression "improving breakage resistance" means to enhance breakage resistance, and breakage resistance can be determined, for example, based on determination criteria of Example 1 of Examples that will be described later.

The sliced chocolate described in the manufacturing method and improving method of the present invention may include respective ingredients contained in the sliced chocolate of the invention, amounts thereof contained, various conditions, and the like.

According to one embodiment of the present invention the following invention is provided:
(1) A sliced chocolate comprising gelatin, the sliced chocolate having a gelatin content of from 0.8 to 2.8% by mass with respect to the sliced chocolate and being an oil-in-water type emulsion.
(2) The sliced chocolate according to (1), closely wrapped by a wrapping film.
(3) The sliced chocolate according to (2), in which the wrapping film is a wrapping film for sliced cheese, and the sliced chocolate is individually wrapped by the film.
(4) The sliced chocolate according to (3), in which a form of individual wrapping of the sliced chocolate has a size of from 40 to 100 mm × from 40 to 100 mm × from 0.5 to 3 mm in thickness.
(5) The sliced chocolate according to any of (1) to (4), substantially not comprising glycerin.
(6) The sliced chocolate according to any of (1) to (5), in which the sliced chocolate has a water content of from 11 to 30% by mass.
(7) The sliced chocolate according to (6), in which the sliced chocolate has a water content of from 13 to 30% by mass.
(8) The sliced chocolate according to any of (1) to (7), in which the gelatin content is from 1.0 to 2.5% by mass with respect to the sliced chocolate.
(9) The sliced chocolate according to (8), in which the gelatin content is from 1.1 to 1.6% by mass with respect to the sliced chocolate.
(10) The sliced chocolate according to any of (1) to (9), in which the chocolate has an oil content of from 26 to 40% by mass.
(11) A method for manufacturing the sliced chocolate according to any of (1) to (10), comprising steps of pushing apart a molten base of a chocolate including gelatin into slices in a wrapping film, and cooling and solidifying the slices.
(12) The manufacturing method according to (11), comprising a step of individually wrapping by the wrapping film, the film being a wrapping film for sliced cheese.
(13) The manufacturing method according to (11) or (12), in which the molten base of the chocolate has a viscosity of 200 poise or more.
(14) The manufacturing method according to (13), in which the molten base of the chocolate has a product temperature of from 35 to 44°C.
(15) A method for improving wrapping film releasability of a sliced chocolate, comprising adding gelatin in an amount of from 0.8 to 2.8% by mass with respect to the sliced chocolate.
(16) A method for improving breakage resistance of sliced chocolate, including adding gelatin in an amount of from 0.8 to 2.8% by mass with respect to the sliced chocolate, and mixing and emulsifying into an oil-in-water type emulsion.

### EXAMPLES

The present invention will be described in detail with reference to Examples below. However, the invention is not limited thereto.

### Example 1: Sliced Chocolate (1): Lab Base (from 1 to 2 kg)

A base chocolate (product temperature: 40°C) was prepared according to a formulation shown in Table 1 below.

**Table 1**

| [Formulation of base chocolate] | |
|---|---|
| Cacao mass | 22 |
| Whole milk powder | 19 |
| Sugar | 39 |
| Cocoa butter | 7 |
| Hard butter | 9 |
| Lactose | 4 |
| Total | 100 |

| | |
|---|---|
| (Unit: % by mass) | |

Table 2 shows component values of the obtained base chocolate.

**Table 2**

| [Component values of base chocolate] | |
|---|---|
| Cacao mass content | 21.73% |
| Cocoa butter content | 19.25% |
| Vegetable oil | 9.20% |
| Milk fat content | 4.74% |
| Total oil content | 33.19% |
| Sugar content | 38.52% |

| | |
|---|---|
| (Unit: % by mass) | |

The obtained base chocolate was maintained at a product temperature of from 37 to 40°C. Then, according to a formulation shown in Table 3 below, fresh cream, a gelatin hydrolysis product, liquor, and a spirit were added to the base chocolate, and the mixture was mixed and emulsified to obtain a molten chocolate base. The gelatin hydrolysis product used was one prepared by adding gelatin (pig skin gelatin, manufactured by Niita Gelatin Inc.) into water in a ratio of 1:10.

**Table 3**

| [Product Formulation] | |
|---|---|
| Base chocolate | 73 |
| Fresh cream | 11 |
| Gelatin hydrolysis product | 14 |
| Liquor | 1 |
| Spirit | 1 |
| Total | 100 |

| | |
|---|---|
| (Unit: % by mass) | |

Component values of the obtained molten chocolate base were a total oil content: 29.49% by mass, a sugar content: 28.10% by mass, a water content: 18.72% by mass, gelatin: 1.23% by mass, and an alcohol content: 1.28% by mass.

The viscosity and emulsion system of the molten chocolate base were measured according to the following methods. In addition, confirmation was made as to the mixed state (whether emulsification was done or not).

### [Viscosity]

Viscosity was measured by a viscometer (VISCOMETER TV-20, manufactured by Tokimec, Inc.) while rotating the molten chocolate base 10 times per minute by using a rotor of SPINDLE No. H5. Measurement temperature was set to the product temperature.

### [Emulsion System]

As for the type of emulsion, a chocolate product after cooling and solidification was classified into an O/W (oil-in-water) system (type) or a W/O (water-in-oil) system (type) by using a pocket type multitester (manufactured by Mother Tool Co., Ltd). Specifically, each electrode was contacted with the surface of the cooled and solidified chocolate product base to electrically energize the product base, which was then determined to be an O/W system if the needle swung, and a W/O system if not.

The molten chocolate base (a product temperature of from 35 to 44°C) was filled in a film for sliced cheese (manufactured by Howa Sangyo Co., Ltd., material: a part coat-over coat ink/release PET, 16 µm) and molded into an individually wrapped sliced chocolate by using a film wrapping machine (manufactured by Bourbon Corporation). The film wrapping machine is a machine using a system similar to that of slice cheese filling/wrapping machines, and adopts air cooling instead of water cooling as a cooling method. Specifically, the molten chocolate base at a product temperature of 38°C was filled into a cylindrical film wound in a roll shape, and rolled so as to have a thickness of 2 mm. Then, the chocolate wrapped in the film was pushed apart into slices so as to have a size of 84 mm × 84 mm × 2 mm in thickness, and air-cooled and solidified for from 1 to 2 minutes on a cooling belt at 5°C. After air-cooling and solidifying, portions without any oozed and extruded chocolate were cut together with the film in the size of 84 mm × 84 mm × 2 mm in thickness to obtain an individually wrapped sliced chocolate (product temperature: 5°C).

The obtained individually wrapped sliced chocolate (Test Example 1) was stored in a cooler (refrigerator) (5°C), and sensory evaluation was performed regarding original tastes of nama chocolate. Additionally, film releasability and breakage resistance were evaluated according to the following methods.

The sensory evaluation was performed by four trained panelists. As described below, meltability in the mouth and flavor release (flavor) were evaluated as the original tastes of nama chocolate, and furthermore, elasticity (resilient tactile sensation) was also evaluated.

### (Evaluation Criteria of Sensory Evaluation)

"Meltability in the mouth" was represented by a degree of strength, and was evaluated based on the following determination criteria:
2: smoothly melty in the mouth.
1: hardly melty in the mouth and hard, with the feeling of something foreign in the mouth.

"Flavor release" was represented by a degree of strength, and was evaluated based on the following determination criteria:
2: well-balanced flavor release, with rich flavor sensation.
1: poor flavor release, and indistinct taste.

"Elasticity" was represented by a degree of strength, and was evaluated based on the following determination criteria:
2: resilient tactile sensation.
1: poor tactile sensation, and not elastic.

Film releasability was determined depending on the presence or absence of chocolate adhering onto the film and the presence or absence of stickiness to hand when releasing the film of sliced chocolate under conditions of a product temperature of 5°C (immediately after taking out from the refrigerator) or a product temperature of 20°C (when returned to room temperature after taking out from the refrigerator). Specifically, "film releasability" was represented by a degree of strength, and was evaluated based on the following determination criteria:
3: almost no chocolate adhering to the film, not sticky when hold in hand, and high film releasability.
2: adhesion of chocolate to the film is partially observed, but sliced chocolate is sufficiently releasable from the film; and not sticky when hold in hand.
1: adhesion of chocolate to the film is wholly observed, and sliced chocolate cannot be released from the film; and sticky when hold in hand.

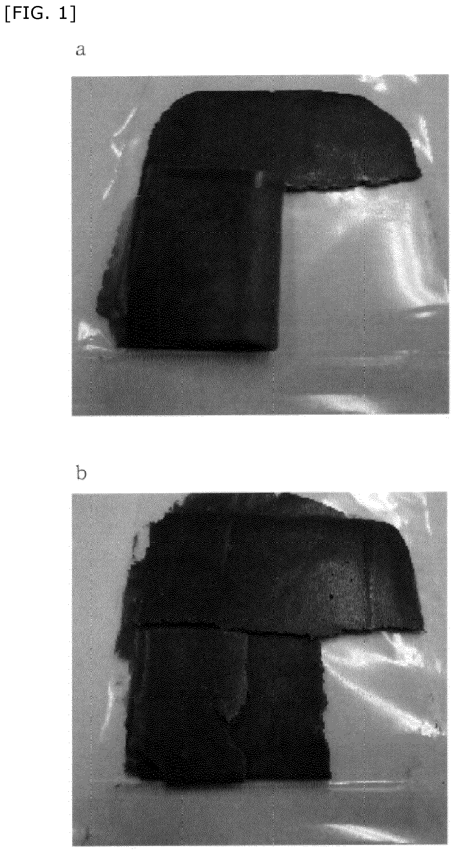

Breakage resistance was determined depending on the presence or absence of cracks and breakage when folded into two at from 90 to 180° such that both right and left ends of sliced chocolate released from the film met under the conditions of the product temperature of 5°C (immediately after taking out from the refrigerator) or the product temperature of 20°C (when returned to room temperature after taking out from the refrigerator). Herein, breakage resistance can also be referred to as bending resistance and plasticity. Specifically, "breakage resistance" was represented by a degree of strength, and was evaluated based on the following determination criteria:
5: when bent at 180°, chocolate is not broken and no cracks occur, exhibiting extremely high breakage resistance, and having plasticity (FIG. 1a).
4: when bent at 180°, chocolate is not broken, but crack(s) occur(s), exhibiting high breakage resistance.
3: when bent at 180°, chocolate is broken, and when bent at 90°, it is not broken and no cracks occur, exhibiting slightly high breakage resistance.
2: when bent at 180°, chocolate is broken, and when bent at 90°, it is not broken but crack(s) occur(s), exhibiting slightly low breakage resistance.
1: when bent at 90°, chocolate is broken, exhibiting low breakage resistance and having no plasticity (FIG. 1b)

Furthermore, moldability of sliced chocolate to push apart into slices (molding suitability) was evaluated based on the presence or absence of leakage and extrusion of the molten chocolate base from the film after molding. Specifically, "moldability" was represented by a degree of strength, and was evaluated based on the following determination criteria:
3: there is neither leakage nor extrusion from the film.
2: there is no leakage from the film, with slight extrusion therefrom, but not problematic in manufacturing.
1: there is leakage from the film, and after cooling and solidifying, molding for individual wrapping cannot be done.

Table 4 shows results.

**Table 4**

| | Test Example 1 | |
|---|---|---|
| Viscosity of molten base | Temperature: 37°C | |
| | Viscosity: 32000 cp | |
| Emulsion system | O/W | |
| Mixed state | No separation | |
| Moldability | 3 | |
| Meltability in the mouth | 2 | |
| Flavor release | 2 | |
| Elasticity | 2 | |
| Film releasability | Product temperature 5°C | 3 |
| | Product temperature 20°C | 3 |
| Breakage resistance | Product temperature 5°C | 4 |
| | Product temperature 20°C | 5 |

### Example 2: Verification of Emulsion Systems (O/W and W/O)

Based on the method of Example 1 above, sliced chocolates (84 mm × 84 mm × 2 mm in thickness) (Test Examples 2 to 8) were manufactured in formulations shown in Table 5 below, and mixed states were confirmed to determine emulsion systems. Additionally, based on the methods described in Example 1 above, film releasability and breakage resistance of each sliced chocolate were evaluated, and sensory evaluation was also performed. It is to be noted that the total oil content of the base chocolate was 34.25% by mass.

Table 5 shows results.

**Table 5**

| | | Test Example 2 | Test Example 3 | Test Example 4 | Test Example 5 | Test Example 6 | Test Example 7 | Test Example 8 |
|---|---|---|---|---|---|---|---|---|
| Water content | | 18.69% | 13.21% | 13.21% | 11.01% | 15.96% | 15.92% | 15.92% |
| Total oil content | | 30.26% | 31.94% | 31.94% | 30.99% | 32.87% | 31.32% | 31.32% |
| Gelatin concentration | | 1.23% | 1.30% | 1.30% | 1.39% | 1.22% | 1.23% | 1.23% |
| Emulsifier | ER280 | 0.0% | 1.0% | 1.0% | 1.0% | 1.0% | 1.0% | 1.0% |
| | Sunsoft 818JC | 0.0% | 0.1% | 0.1% | 0.1% | 0.1% | 0.1% | 0.1% |
| Tempering | | Not done | Not done | Done | Not done | Done | Not done | Done |
| Product temperature in mixing | | 40°C | 40°C | 30°C | 40°C | 30°C | 40°C | 30°C |
| Emulsion system | | O/W | O/W | - | - | W/O | O/W | W/O |
| Mixed state | | No separation | No separation | Separated | Separated | Slightly separated | No separation | Slightly separated |
| Film releasability | Product temperature 5°C | 3 | 3 | | | 3 | 3 | 3 |
| | Product temperature 20°C | 3 | 3 | | | 3 | 3 | 3 |
| Breakage resistance | Product temperature 5°C | 4 | 4 | | | 1 Easily broken | 4 | 1 Easily broken |
| | Product temperature 20°C | 5 | 5 | | | 1 Easily broken | 5 | 1 Easily broken |

| | | | | | | | | |
|---|---|---|---|---|---|---|---|---|
| (Unit: % by mass) | | | | | | | | |

Test Examples 4 and 5 had separation and therefore molding was impossible.

As shown in Table 5, it was found that when the emulsion system is W/O, breakage resistance is low.

As a result of the sensory evaluation, the sliced chocolates of Test Examples 2, 3, and 7 exhibited favorable melt-in-the-mouth feeling, flavor release, and elasticity.

### Example 3: Verification of Gelatin Concentration

### (1) The case of a water content of 18.7% by mass

O/W type sliced chocolates (84 mm × 84 mm × 2 mm in thickness) (Test Examples 9 to 14) were manufactured according to the method of Example 1 above, except that the gelatin concentration was changed to formulations shown in Table 6 below, and film releasability and breakage resistance of each sliced chocolate were evaluated. Additionally, sensory evaluation was performed according to the methods of Example 1 above.

Table 6 shows results.

**Table 6**

| | Gelatin concentration (% by mass) | Film releasability | Elasticity | Comments |
|---|---|---|---|---|
| Test Example 9 | 0.80% | 2 | 2 | Elasticity (resilient tactile sensation) and film releasability at 5°C are favorable. Film releasability at 20°C is slightly poor. |
| | | | | Melt-in-the-mouth feeling and flavor release are favorable. |
| Test Example 10 | 1.12% | 3 | 3 | Film releasability, elasticity, flavor release, and the like are well-balanced. Melt-in-the-mouth feeling and flavor release are favorable. |
| Test Example 11 | 1.22% | 3 | 3 | Film releasability, elasticity, flavor release, and the like are well-balanced. Melt-in-the-mouth feeling and flavor release are favorable. |
| Test Example 12 | 1.53% | 3 | 3 | As compared with Test Example 11, film releasability and elasticity are not so different. Flavor release is more preferable in Test Example 11. Melt-in-the-mouth feeling is favorable. |
| Test Example 13 | 1.80% | 3 | 2 | Film releasability is favorable. Flavor release and melt-in-the-mouth feeling are more preferable in Test Example 11. |
| | | | | When producing a gelatin hydrolysis product, it is hard to dissolve gelatin, thus slightly lowering work efficiency. |
| Test Example 14 | 2.30% | 3 | 1 | Film releasability is favorable. Flavor release and melt-in-the-mouth feeling are more preferable in Test Example 11. |
| | | | | When producing a gelatin hydrolysis product, it is hard to dissolve gelatin, and when molding, the base tends to immediately solidify, thus lowering work efficiency. |

As shown in Table 6, work efficiency in manufacturing of Test Examples 9 to 12 was favorable as compared with Test Examples 13 and 14.

Test Examples 9 to 14 had favorable breakage resistance.

Under the condition of the water content of 18.7% by mass, it was difficult to dissolve 2.8% by mass or more of gelatin. When gelatin concentration is high (for example, 2.8% by mass), there can be obtained a sliced chocolate favorable in film releasability and breakage resistance as long as the water content is increased and a gelatin hydrolysis product can be prepared in which gelatin granules are dissolved until they disappear.

### (2) The case of a water content of 30% by mass

O/W type sliced chocolates (84 mm × 84 mm × 2 mm in thickness) (Test Examples 15 to 18) were manufactured according to the method of Example 1 above, except that the gelatin concentration was changed to formulations shown in Table 7 below, and film releasability and breakage resistance of each sliced chocolate were evaluated. Additionally, sensory evaluation was performed according to the methods of Example 1 above.

Table 7 shows results.

**Table 7**

| concentration | Gelatin concentration (% by mass) | Film releasability | Elasticity | Comments |
|---|---|---|---|---|
| Test Example 15 | 1.21% | 2 | 2 | The base is loose and low in moldability. Meltability in the mouth and flavor release are favorable. |
| Test Example 16 | 3.00% | 3 | 2 | The base is loose and low in moldability. It is elastic like gummi candies, and flavor release is more preferable in Test Example 15. |
| Test Example 17 | 6.04% | 3 | 2 | Moldability is favorable. It is elastic like gummi candies, and flavor release is more preferable in Test Example 15. |
| Test Example 18 | 9.01% | 3 | 1 | The base is hard and low in moldability. It is elastic like rubber, and flavor release is more preferable in Test Example 15. |

Test Examples 15 to 18 had favorable breakage resistance.

Under the condition of the water content of 30% by mass, a gelatin hydrolysis product was able to be prepared in which gelatin granules were dissolved until they disappeared, even when the gelatin content was 9% by mass. Thus, a sliced chocolate favorable in film releasability and breakage resistance was able to be obtained.

### Example 4: Sliced Chocolate (2)

Base chocolate was prepared in a formulation shown in Table 8 below.

**Table 8**

| Formulation of base chocolate | |
|---|---|
| Cacao mass | 18% |
| Whole milk powder | 10% |
| Sugar | 40% |
| Cocoa butter | 15% |
| Hard butter | 17% |

### (Unit: % by mass)

With the obtained base chocolate under conditions shown in Table 9 below, sliced chocolates (Test Examples 19 and 20) were manufactured based on the method of Example 1 above. Emulsion systems, mixed states, Film releasability, and breakage resistance of the obtained sliced chocolates were evaluated. Additionally, sensory evaluation was performed according to the above methods of Example 1 above.

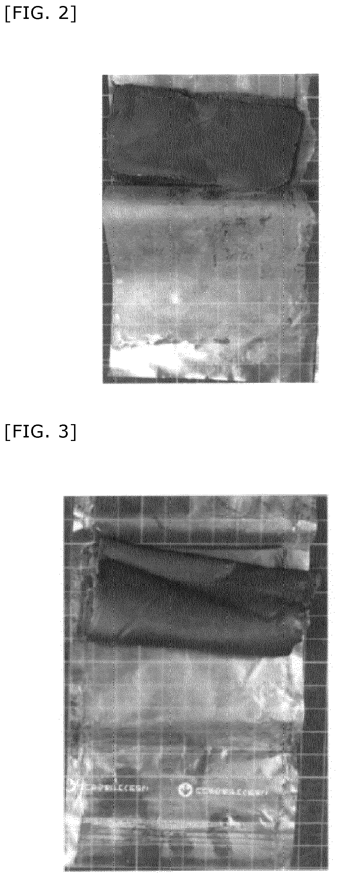

Table 9 shows results. In addition, FIGS. 2 and 3 show photographs of sliced chocolates in respective released states.

**Table 9**

| | | Test Example 19 | Test Example 20 |
|---|---|---|---|
| Water content | | 14.17% | 18.69% |
| Total oil content | | 44.91% | 30.26% |
| Gelatin concentration | | 0.10% | 1.23% |
| Tempering | | Done | Not done |
| Product temperature in mixing | | 30°C | 40°C |
| Emulsion system | | O/W | O/W |
| Mixed state | | No separation | No separation |
| Releasability | Product temperature 5°C | 2 | 3 |
| | Product temperature 20°C | 1 | 3 |
| Breakage resistance | Product temperature 5°C | 4 | 5 |
| | Product temperature 20°C | 4 | 5 |

| | | | |
|---|---|---|---|
| (Unit: % by mass) | | | |

The sliced chocolate of Test Example 20 was favorable in melt-in-the-mouth feeling, flavor release, and elasticity.

### Example 5: Sliced Chocolate (3): Large-Scale Production (from 4 to 6 t)

Based on the method of Example 1 above, large-scale production was performed. As with Example 1, the viscosity and product temperature of the molten base were measured to manufacture a sliced chocolate.

The viscosity of the molten base was 150 poise, and the temperature was 36.3°C.

The obtained sliced chocolate was favorable in all of moldability, meltability in the mouth, flavor release, elasticity, film releasability, and breakage resistance.

### Example 6: Cooking with Sliced Chocolate

Regarding the sliced chocolate of the present invention obtained in Example 1, evaluation was performed regarding nama chocolate sensation when placed on bread and toasted in a toaster (oven toaster KOS1013, manufactured by Koizumi Seiki Corp). As a control, a chocolate bar having a thickness of 4 mm (40 mm × 40 mm) was used. The chocolate bar was placed as it was on bread and toasted. Toasting was performed until the chocolates were melted.

Taste of the chocolate bar was gooey, and was not smooth in the throat. On the other hand, the sliced chocolate of the present invention was smooth in the throat, and maintained nama chocolate flavors.

## Claims

1. A sliced chocolate comprising gelatin, the sliced chocolate having a gelatin content of from 0.8 to 9% by mass with respect to the sliced chocolate and being an oil-in-water type emulsion.

2. The sliced chocolate according to claim 1, wherein the gelatin content is from 0.8 to 2.8% by mass with respect to the sliced chocolate.

3. The sliced chocolate according to claim 1 or 2, closely wrapped by a wrapping film.

4. The sliced chocolate according to claim 3, wherein the wrapping film is a wrapping film for sliced cheese, and the sliced chocolate is individually wrapped by the film.

5. The sliced chocolate according to claim 4, wherein a form of individual wrapping of the sliced chocolate has a size of from 40 to 100 mm × from 40 to 100 mm × from 0.5 to 3 mm in thickness.

6. The sliced chocolate according to any one of claims 1 to 5, substantially not comprising glycerin.

7. The sliced chocolate according to any one of claims 1 to 6, wherein the sliced chocolate has a water content of from 11 to 30% by mass.

8. The sliced chocolate according to claim 7, wherein the water content of the sliced chocolate is from 13 to 30% by mass.

9. The sliced chocolate according to any one of claims 1 to 8, wherein the gelatin content is from 1.0 to 2.5% by mass with respect to the sliced chocolate.

10. The sliced chocolate according to claim 9, wherein the gelatin content is from 1.1 to 1.6% by mass with respect to the sliced chocolate.

11. The sliced chocolate according to any one of claims 1 to 10, wherein the chocolate has an oil content of from 24 to 40% by mass.

12. The sliced chocolate according to claim 11, wherein the oil content of the chocolate is from 26 to 40% by mass.

13. A method for manufacturing the sliced chocolate according to any one of claims 1 to 12, comprising steps of pushing apart a molten base of a chocolate including gelatin into slices in a wrapping film, and cooling and solidifying the slices.

14. The manufacturing method according to claim 13, comprising a step of individually wrapping by the wrapping film, the wrapping film being a wrapping film for sliced cheese.

15. The manufacturing method according to claim 13 or 14, wherein the molten base of the chocolate has a viscosity of 100 poise or more.

16. The manufacturing method according to claim 15, wherein the molten base of the chocolate has a viscosity of 200 poise or more.

17. The manufacturing method according to claim 15 or 16, wherein the molten base of the chocolate has a product temperature of from 33 to 50°C.

18. The manufacturing method according to claim 17, wherein the molten base of the chocolate has a product temperature of from 35 to 44°C.

19. A method for improving wrapping film releasability of a sliced chocolate, comprising adding gelatin in an amount of from 0.8 to 9% by mass with respect to the sliced chocolate.

20. The method according to claim 19, comprising adding the gelatin in an amount of from 0.8 to 2.8% by mass with respect to the sliced chocolate.

21. A method for improving breakage resistance of a sliced chocolate, comprising adding gelatin in an amount of from 0.8 to 9% by mass with respect to the sliced chocolate, and mixing and emulsifying into an oil-in-water type emulsion.

22. The method according to claim 21, comprising adding the gelatin in an amount of from 0.8 to 2.8% by mass with respect to the sliced chocolate, and mixing and emulsifying into an oil-in-water type emulsion.
